# EUROPEAN PATENT APPLICATION

(11) **EP 4 400 380 A1**
(43) Date of publication of application: **17.07.2024**
(21) Application number: 23150990.2
(22) Date of filing: 10.01.2023
(51) Int. Cl.: B60W 30/18

(54) **VEHICLE DEACTIVATION CONTROL**

(71) Applicant: VOLVO TRUCK CORPORATION, 405 08 Göteborg (SE)
(72) Inventor: WILHELMSSON, Martin, 416 73 GÖTEBORG (SE); NORDHOLM, Linus, 436 40 ASKIM (SE); SMIDEBRANT, Tobias, 415 51 GÖTEBORG (SE)
(74) Representative: Ström & Gulliksson AB

(57) **Abstract**

A computer system (900) comprising a processor device (902) is provided. The processor device (902) is configured to receive a deactivation request (20) to deactivate a heavy-duty vehicle (10). The processor device (902) is further configured to determine a controlled partial deactivation instruction (40) of at least one subsystem (14) of the vehicle (10), wherein the controlled partial deactivation instruction (40) is determined by an autonomous model (36) comprising a historical usage pattern (34) of the vehicle (10). The historical usage pattern (34) comprises information of deactivation events and activation events of the vehicle (10) that has historically occurred at reference locations (33). The processor device (902) is further configured to control the vehicle (10) to execute the controlled partial deactivation instruction (40) such that the vehicle (10) is at least partially deactivated either immediately, or after a delay, as determined by the controlled partial deactivation instruction (40).

## Description

### TECHNICAL FIELD

The disclosure relates generally to vehicle control. In particular aspects, the disclosure relates to vehicle deactivation control. The disclosure can be applied in heavy-duty vehicles, such as trucks, buses, and construction equipment. Although the disclosure may be described with respect to a particular vehicle, the disclosure is not restricted to any particular vehicle.

### BACKGROUND

Heavy-duty vehicles are typically operating during long periods of time and over large geographical areas. Although being in operation, the vehicle is not always driving, i.e.,, being in ongoing motion such that its position is changed. For instance, the vehicle sometimes has to stop at stop-lights, during delivery or pick-up of goods, at traffic stockings, at pedestrian crossings, or at charging stations, to name some common reasons of vehicle stops. During these stops, the vehicle is often entering an idle mode that might cause unnecessary energy consumption. In order to save energy and thus provide a more economic driving procedure, most heavy-duty vehicles of today often comprise control functionality for deactivating the vehicle after a stop has been recorded.

The prior art offers very little versatility in terms of controlling the vehicle deactivation. The required condition in order to execute a vehicle deactivation is often a lapse of a mere fixed timer. Other alternative solutions seen in the art involve performing analyses on states of the vehicle components or (sub)systems to determine whether a deactivation is suitable. These solutions are costly, inaccurate and oftentimes also prone to an energy consumption that even exceeds the corresponding energy consumption of a vehicle that is never deactivated at stops.

The present inventors have realized the above-mentioned deficiencies of the prior art, and are herein presenting improvements in relation to vehicle deactivation control that seek to solve, or at least mitigate, one or more of these deficiencies.

### SUMMARY

According to a first aspect of the disclosure, a computer system comprising a processor device is provided. The processor device is configured to receive a deactivation request to deactivate a heavy-duty vehicle; in response to said receiving, determine a controlled partial deactivation instruction of at least one subsystem of the heavy-duty vehicle, wherein the controlled partial deactivation instruction is determined by an autonomous model, said autonomous model comprising a historical usage pattern of the heavy-duty vehicle, the historical usage pattern comprising information of deactivation events and activation events of the heavy-duty vehicle having historically occurred at reference locations; and control the heavy-duty vehicle to execute the controlled partial deactivation instruction such that the heavy-duty vehicle is at least partially deactivate either immediately, or after a delay, as determined by the controlled partial deactivation instruction.

The first aspect of the disclosure may seek to provide a vehicle deactivation control strategy. A technical benefit may include a versatile, energy efficient and robust control procedure that lengthens the lifetime of vehicle components while at the same time provides an economic and eco-friendly driving with minimized emissions and low energy consumption.

According to a second aspect of the disclosure, a computer-implemented method for controlling heavy-duty vehicle deactivation is provided. The method comprises, by a processor device of a computer system, receiving a deactivation request to deactivate a heavy-duty vehicle; in response to said receiving, determining, by the processor device, a controlled partial deactivation instruction of at least one subsystem of the heavy-duty vehicle, wherein the controlled partial deactivation instruction is determined by an autonomous model, said autonomous model comprising a historical usage pattern of the heavy-duty vehicle, the historical usage pattern comprising information of deactivation events and activation events of the heavy-duty vehicle having historically occurred at reference locations; and controlling, by the processor device, the heavy-duty vehicle to execute the controlled partial deactivation instruction such that the heavy-duty vehicle is at least partially deactivate either immediately, or after a delay, as determined by the controlled partial deactivation instruction.

In some examples, the autonomous model is configured to receive input data comprising usage data of the heavy-duty vehicle with reference to said reference locations, and the deactivation request, process the input data, and output the controlled partial deactivation instruction as a result of said processing of the input data. A technical benefit may include that the autonomous model will be provided with, process and output information relating to previous vehicle usage, which means that the controlled vehicle activation will be more intelligent.

In some examples, the autonomous model is weighted for some of the reference locations and/or a particular deactivation request to deactivate the heavy-duty vehicle. A technical benefit may include selective control of certain potentially important reference locations and/or requests.

In some examples, the autonomous model calculates a cost function, wherein said deactivation and activation events are associated with positive costs, wherein time periods between a deactivation event and a subsequent activation event among said deactivation events and activation events having historically occurred are associated with negative costs. A technical benefit may include being able to perform calculations on various events and putting it into perspective when determining the controlled partial deactivation instruction.

In some examples, the cost function calculates a usage threshold limit by combining the positive and negative costs for said reference locations. A technical benefit may include providing a combined value that reflects the actual net cost.

In some examples, said executing of the controlled partial deactivation instruction involves determining whether the usage threshold limit is satisfied for a current geographical location. A technical benefit may include accurate real-time comparisons such that prompt control of the vehicle deactivation is achieved.

In some examples, the cost function is updated over time by continuously calculating positive and negative costs for the reference locations. A technical benefit may include robustness for the autonomous model and thus the controlled partial deactivation instruction.

In some examples, the cost function is a forgetting function in response to said continuous calculations of positive and negative costs for the reference locations. A technical benefit may include dynamically adjusting the autonomous model with new (and improved) data over time. The forgetting function readily adapts to newly encountered data pertaining to a change in vehicle driving or stopping behaviour.

In some examples, the at controlled partial deactivation instruction comprises an instruction to set said at least one subsystem into a lower energy consumption mode; and/or an instruction to deactivate said at least one subsystem. A technical benefit may include dynamic eco-driving functionalities.

In some examples, the reference locations comprises one or more geographical areas defined by geographical coordinates retrieved from one or more positioning systems. A technical benefit may include being able to discover patterns by the autonomous model such that its performance may be improved.

In some examples, the deactivation request is received from a vehicle subsystem in response to a vehicle subsystem condition being met, or a driver of the heavy-duty vehicle, the driver being a person or an autonomous unit. A technical benefit may include being able to receive the deactivation request from different sources to provide the autonomous model with improved data in a more efficient way.

In some examples, said controlling comprises selectively opening and/or closing of relays of one or more contactors of the heavy-duty vehicle. A technical benefit may include selective control of vehicle contactors such that a lesser energy consumption is achieved.

In some examples, the deactivation and activation events of the heavy-duty vehicle comprises geographical data pertaining to the reference locations. A technical benefit may include storing geographical information that improves the accuracy in determining the controlled partial deactivation instruction.

According to a third aspect, a heavy-duty vehicle is provided. The heavy-duty vehicle comprises the processor device to perform the method of the second aspect.

In some examples, the heavy-duty vehicle comprises one or more contactors, a contactor being an electromechanical switching device configured to mechanically operate an electric contact of one or more of the at least one subsystem of the heavy-duty vehicle. A technical benefit may include being able to control electromechanical units of the vehicle.

In some examples, the at least one subsystem is an energy-consuming vehicle component. A technical effect may include providing less energy consumption.

According to a fourth aspect, a computer program product is provided. The computer program product comprises program code for performing, when executed by the processor device, the method of the second aspect.

According to a fifth aspect, a control system is provided. The control system comprises one or more control units configured to perform the method of the second aspect.

According to a sixth aspect, a non-transitory computer-readable storage medium is provided. The non-transitory computer-readable storage medium comprises instructions, which when executed by the processor device, cause the processor device to perform the method of the second aspect.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**FIG. 1** is an exemplary schematic illustration of a heavy-duty vehicle.
**FIG. 2** is an exemplary schematic block diagram visualizing data being used by the heavy-duty vehicle for controlling an at least partial deactivation thereof.
**FIG. 3** is an exemplary illustration of an autonomous model which may be used to determine an at least partial vehicle deactivation.
**FIG. 4** is an exemplary illustration of a road map where the heavy-duty vehicle may operate at various reference locations.
**FIGS. 5A-B** are exemplary illustrations of a vehicle deactivation control strategy according to two different scenarios.
**FIGS. 6A-E** illustrate exemplary schematic diagrams that may be used in determining an at least partial vehicle deactivation at various reference locations.
**FIG. 7** is an exemplary schematic flowchart illustration of a method.
**FIG. 8** is an exemplary schematic flowchart illustration of a method.
**FIG. 9** is a schematic diagram of a computer system for implementing examples disclosed herein according to one example.

### DETAILED DESCRIPTION

Aspects set forth below represent the necessary information to enable those skilled in the art to practice the disclosure.

As discussed in the Background section, the available prior art solutions are insufficient when it comes to vehicle deactivation control. More specifically, in many situations the deactivation control functionality being in place instead causes an excessive amount of deactivations where and when they are not needed. The present disclosure advantageously analyses *where* (geographically) deactivations are needed, *to what extent* deactivations are needed, and *which components* deactivations should be targeted at. The present disclosure will therefore not be associated with any risk of deactivating a component that need not be deactivated, or deactivating a component when there is a high risk of the same component needing to be active again in the near future. To this end, the energy efficiency and thus the economic driving approach of the heavy-duty vehicle will be improved while at the same time minimizing component wear and tear.

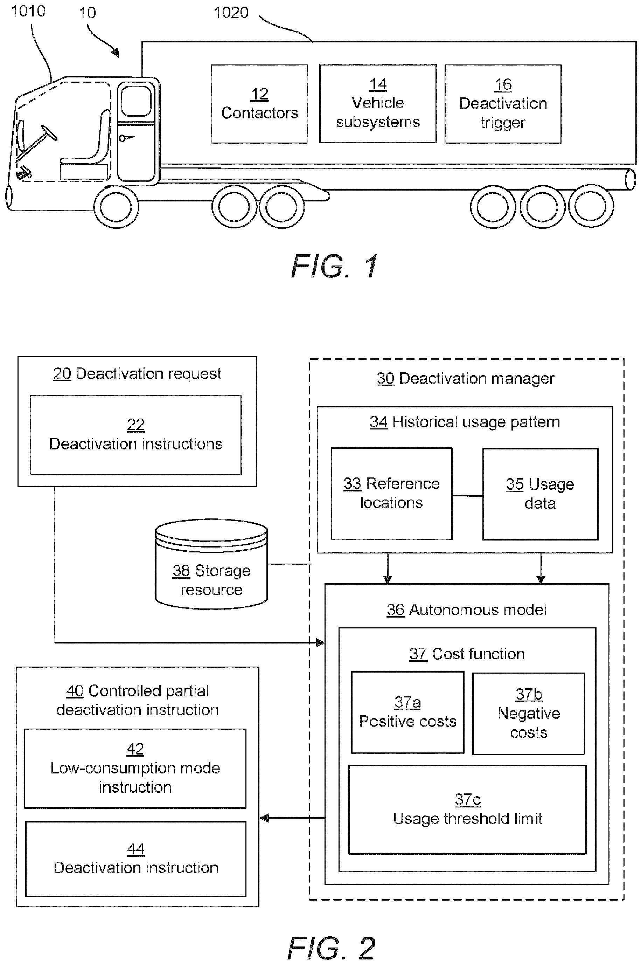

**FIG. 1** is an exemplary schematic illustration of a heavy-duty vehicle **10** (hereinafter referred to vehicle **10** for reasons of brevity). This particular vehicle **10** comprises a tractor unit **1010** which is arranged to tow a trailer unit **1020.** In other examples, other heavy-duty vehicles may be employed, e.g., trucks, buses, and construction equipment. Although not explicitly visualized in the figure, the skilled person will appreciate that the vehicle **10** comprises all necessary vehicle units and associated functionality such that it may operate as the skilled person would expect of a vehicle **10.** Emphasis in the present disclosure is instead directed at the vehicle deactivation control functionality, as will now be discussed.

The vehicle **10** comprises one or more contactors **12,** one or more vehicle subsystems **14** and one or more deactivation triggers **16.** Although these components **12, 14, 16** are visualized as schematic blocks at the trailer unit **1020,** the skilled person will appreciate that these placements are just for illustrative purposes. The units **12, 14, 16** may be arranged and be operable anywhere in the vehicle **10** (for instance at the tractor unit **1010** or at one or more trailer units **1020**), or alternatively possibly remotely from the vehicle **10** (i.e., being remotely operable).

The (at least one) contactor **12** may be an electromechanical switching device configured to mechanically operate an electric contact of one or more of the at least one subsystem **14** of the vehicle **10.** The electromechanical switching device is preferably a relay. Alternatively, the contactor **12** may be based on other switching technologies, such as magnetically induced switches, mechanical switches, pneumatic switches, light switches, Hall-effect switches, inertial switches, isolator switches, optical switches, piezo switches, pull/push switches, thermal switches, to name a few exemplary switching technologies. The contactor **12** may be disconnected or connected, where each disconnect or connect of the contactor **12** incurs a cost. Contactor **12** connects are shown to be particularly expensive, so it is desired to minimize connects. The present disclosure effectively minimizes the necessary number of disconnects and connects of the contactor **12** by selective control of the vehicle deactivation, for instance via closing/opening of relays.

The (at least one) vehicle subsystem **14** may be a power-consuming vehicle component, i.e., any component of a vehicle that in some way consumes power that may potentially be optimized by the smart vehicle deactivation control procedure as presented in this disclosure. The term *component* shall therefore be interpreted in the broadest of sense, namely as any component that is a part of a vehicle system or subsystem. To this end, the power-consuming vehicle component may be any one of an engine, a drive train, a braking system, a cooling system, a battery system, an electronic control module (ECU), or any part thereof.

The (at least one) deactivation trigger **16** may be any suitable device capable of providing a deactivation request. The deactivation trigger **16** may be a physical component or a software-controlled component. The deactivation trigger **16** may be manually or automatically controlled. The deactivation trigger **16** may be controlled from within or around the vehicle **10,** or from a remote location. The deactivation trigger **16** may be operable by a driver of the vehicle, where the driver is a person or an autonomous unit (in the case of autonomously driven vehicles). Alternatively or additionally, the deactivation trigger **16** may be operable by a vehicle subsystem **14** in response to a vehicle subsystem condition being met. For instance, a battery module may indicate when its charging level has surpassed a certain limit such that it may subsequently be controlled to be at least partially deactivated immediately or after a delay determined by a historical usage pattern. Other scenarios may be realized for other vehicle subsystems **14.** The deactivation trigger **16** may be a key ignition, a wireless car key, a mobile-device controllable functionality, a physical button or switch or a vehicle subsystem-controllable unit, to name a few exemplary deactivation triggers **16.** If the deactivation trigger **16** utilizes wireless communication, this communication may be based on short-range or long-range communication standards commonly applied in the art. For instance, the short-range or long-range communication standards may include IEEE 802.11, IEEE 802.15, ZigBee, WirelessHART, WiFi, Bluetooth^{®}, BLE, RFID, WLAN, MQTT IoT, CoAP, DDS, NFC, AMQP, LoRaWAN, Z-Wave, Sigfox, Thread, EnOcean, mesh communication, any other form of proximity-based device-to-device radio communication signal such as LTE Direct, W-CDMA/HSPA, GSM, UTRAN, LTE or Starlink.

**FIG. 2** is an exemplary schematic block diagram visualizing data being used by the heavy-duty vehicle **10** for controlling an at least partial deactivation thereof. The data flow is initiated by the provisioning of a deactivation request **20.** The deactivation request **20** may comprise deactivation instructions **22** to deactivate the vehicle. The deactivation request **20** may be initiated by actuation of the deactivation trigger **16,** as was discussed with reference to **FIG. 1****.** The deactivation request **20** thus corresponds to a normal deactivation request of the vehicle **10.**

The deactivation request **20** may be provided to a deactivation manager **30.** The deactivation manager **30** is to be understood as a software module capable of receiving, processing and outputting data associated with the vehicle. The deactivation manager **30** may be provisioned by a vehicle server, or any number of distributed (e.g., cloud) servers. Such a server may be a cloud-based server implemented using any commonly known cloud-computing platform technologies, such as e.g., Amazon Web Services, Google Cloud Platform, Microsoft Azure, DigitalOcean, Oracle Cloud Infrastructure, IBM Bluemix or Alibaba Cloud. Other alternative server configurations may be realized, based on any type of client-server or peer-to-peer (P2P) architecture. Server configurations may thus involve any combination of e.g., web servers, database servers, email servers, web proxy servers, DNS servers, FTP servers, file servers, DHCP servers, to name a few.

The deactivation manager **30** may comprise a storage resource **38.** The storage resource **38** may be configured to store data associated with the deactivation manager **30.** The storage resource **38** may be maintained by and/or configured as a cloud-based service, being included with or external to the cloud-based server as described above. Connection to the cloud-based storage resource **38** may be established using DBaaS (Database-as-a-service). For instance, the cloud-based storage resource **38** may be deployed as a SQL data model such as MySQL, PostgreSQL or Oracle RDBMS. Alternatively, deployments based on NoSQL data models such as MongoDB, Amazon DynamoDB, Hadoop or Apache Cassandra may be used. DBaaS technologies are typically included as a service in the deactivation manager **30.**

In response to receiving the deactivation request **20,** the deactivation manager **30** is configured to determine a controlled partial deactivation instruction **40** of at least one subsystem **14** of the vehicle **16.** The controlled partial deactivation instruction **40** differs from the deactivation instructions **22** of the deactivation request **20** in that it is not a normal deactivation of the vehicle **10.** The purpose of the controlled partial deactivation instruction **40** is to selectively control which, to what extent, and (geographically) where certain subsystems **14** of the vehicle **10** are to be deactivated. To this end, the controlled partial deactivation instruction **40** may comprise an instruction **42** to set at least one subsystem **14** into a lower energy consumption mode. Alternatively or additionally, the controlled partial deactivation instruction **40** may comprise an instruction **44** to deactivate at least one subsystem **14.**

The controlled partial deactivation instruction **40** is then executed, thereby at least partially deactivating a vehicle subsystem **14** either immediately, or after a delay, as determined by a historical usage pattern **34** (which will soon be discussed in detail). The delay may be an arbitrary time period ranging from a few seconds to several hours. The delay is not restricted to any particular duration. The term "at least partially deactivated immediately or after a delay" means that some subsystems **14** are completely deactivated immediately, some other subsystems **14** are deactivated after the delay, and some others are set into a lower energy consumption mode directly or after the delay. The procedure of executing the controlled partial deactivation instruction **40** controls this.

The predefined duration may depend on a plurality of different factors relating to the historical usage pattern **34** of the vehicle **10.** The historical usage pattern **34** may comprise usage data **35** that comprises information of deactivation events and activation events of the vehicle **10** having historically occurred. The historical usage pattern **34** is thus autonomously updated with geographical data pertaining to where these deactivation and activation events have occurred, i.e. at what reference locations **33.** Accordingly, the geographical data included in the historical usage pattern **34** defines location-related information for all deactivation and activation events that have previously been performed by the vehicle **10.** For instance, this may be recorded each time the vehicle **10** receives a deactivation request or each time a deactivation or activation of any one of the subsystems **14** of the vehicle **10** is recorded. The geographical data may be retrieved by one or more positioning systems, for instance GPS, GNSS, GLONASS, BeiDou, Galileo, NavIC or QZSS. The positioning system(s) may be arranged as an onboard system on the vehicle **10,** or alternatively as a remote service configured to provide the vehicle **10** with said geographical data. Yet alternatively, the geographical data may be shared between a plurality of vehicles by telematics data transfer. The geographical data may be outdoor or indoor (e.g.,, as realized in large indoor logistics facilities, etc.) geographical data.

In view of the above, the deactivation and activation events of the vehicle **10** have historically occurred at reference locations **33.** The geographical data is associated with the reference locations **33.** Reference locations **33** may comprise one or more geographical areas defined by geographical coordinates, e.g., as retrieved from the one or more positioning systems as described above. The geographical areas are not limited to a particular size. Different geographical areas may vary in size. The reference locations **33** may be defined by a range of a plurality of geographical coordinates that define an area, e.g., the area covered by interconnecting four coordinates via a (closest) path. Alternatively, the reference location **33** is defined by fixed graphical coordinates that also cover an arbitrary error margin, e.g., the fixed graphical coordinates *x, y* may cover the general range *x* ± *0.001, y* ± *0.001.* The skilled person will appreciate other possible schemes of defining the reference locations **33** depending on the deactivation/activation activity of the vehicle **10.** "Deactivation/activation activity" is to be interpreted as the number of deactivation or activations occurring over a given time period.

In some examples, a geographical area may be as small as a minimum area that can accommodate the vehicle **10,** e.g., defined by a couple of meters in each direction (x, y seen from above). This example may be realized in scenarios where exact pick-up or drop-off locations for the vehicle **10** can be determined with high confidence. In other examples, a geographical area may be as large as an entire city or even between cities. This example may be realized in scenarios where the confidence of knowing exactly where the vehicle **10** will be associated with high deactivation/activation activity is lower. Clearly, any scenario in between the two examples as described above may be realized, i.e., of varying confidence in position determination and/or varying sizes of geographical areas. By being aware of this and other types of geographical data, the controlled partial deactivation instruction **40** can be dynamically updated and be responsive to the current location of the vehicle **10** where the deactivation request **20** is received such that an energy efficient partial deactivation of the vehicle **10** can be performed. In other words, the historical usage pattern **34** is used to control what action is to be taken in response to a currently received deactivation request **20.**

Further seen in **FIG. 2** is an autonomous model **36.** The autonomous model **36** is configured to determine the controlled partial deactivation instruction **40** based on the historical usage pattern **34** of the vehicle **10.** To this end, the autonomous model **36** comprises information of the historical usage pattern **34,** i.e., the previously occurred deactivation and activation events as well as the reference locations **33.** The autonomous model **36** may be configured to compute statistical data associated with the historical usage pattern **34** and related geographical data. The statistical data may be used to provide an intelligent determination of the controlled partial deactivation instruction **40.** To this end, the autonomous model **36** comprises self-learning features. The autonomous model **36** may be trained on a dataset comprising previously occurred activation or deactivation events. Whenever a deactivation request **20** is received, the autonomous model **36** may thus perform autonomous classifications based on activation events or deactivation events having previously occurred at the reference locations **33.** The classifications may, for instance, relate to the partial deactivations of the vehicle (e.g., delay or no delay, duration of delay, low energy consumption mode or not, and so forth). The autonomous model **36** may implement any known supervised or unsupervised learning algorithm known in the art, such as binary, multi-class, or multi-label classification and/or clustering algorithms. For instance, algorithms such as logistic regression, support vector machines, kernel estimation, decision trees and/or neural networks may be utilized. Furthermore, the autonomous model **36** is capable of learning from each classification of a controlled partial deactivation instruction **40,** such that additionally received deactivation requests **20** may be better classified in terms of subsystem **14** wear and tear and/or energy efficiency.

In view of the above, the autonomous model **36** may receive input data comprising usage data **35** of the vehicle **10.** The usage data **35** is related to the reference locations **33.** Furthermore, the input data to the autonomous model **36** also includes the deactivation request **20** comprising the deactivation instructions **22.** The autonomous model **36** may be further configured to process the input data in order to output the controlled partial deactivation instruction **40.** Some of the input data provided to the autonomous model **36** may be weighted for some of the reference locations **33** and/or some particular deactivation instructions **22.** For example, if the deactivation instructions **22** are associated with a requested emergency shutdown, these deactivation instructions **22** will be significantly weighted such that it is guaranteed that no emergency shutdown of the vehicle **10** is delayed. In other examples, some reference locations **33** are more important than other locations and can be weighted accordingly. More important reference locations **33** may include certain areas (e.g., eco-driving zones) where it is known that the vehicle **10** will be stopped for longer periods of time or will perform a plurality of deactivation requests **20** in shorter periods of time. Additionally, weights may also be provided for certain reference locations **33** where it is known that a certain driver that often/seldom requests deactivation of the vehicle **10** will be operating the vehicle **10.** Other reasonable weighting schemes may be applied as realized by the skilled person.

Although not shown in **FIG. 2****,** the deactivation manager **30** may in some examples be configured to manage external changes to the reference locations **33,** including, for instance, logistics facilities being moved from one location to another or updates in data associated with positioning systems.

In the example shown in **FIG. 2****,** the autonomous model **36** calculates a cost function **37.** The deactivation and activation events are associated with positive costs **37a,** and time periods between a deactivation event and a subsequent activation event among the deactivation and activation events having previously occurred are associated with negative costs **37b.** The other way around would be a possibility as well (i.e., switching which of the events that incur positive and negative costs **37b, 37a**). The cost function **37** may calculate a usage threshold limit **37c** by combining the positive and negative costs **37a, 37b** for various reference locations **33.** Hence, executing the controlled partial deactivation instruction **40** of the subsystem **14** may involve determining whether the usage threshold limit **37c** is satisfied for a current location of the vehicle **10.** Satisfying the usage threshold limit **37c** for a current location of the vehicle **10** may be interpreted as current vehicle usage exceeding a limit which is associated with causing a certain type of partial vehicle deactivation.

The cost function **37** may be updated over time by continuously calculating positive and negative costs **37a, 37b** for the reference locations **33.** By said continuous calculation, the cost function **37** may be a forgetting function. Forgetting functions are known in the art as a way of describing how accuracy or discriminability declines as the temporal distance from the event to be remembered increases. In this sense, if the cost function **37** detects a change in behaviour of the calculated positive and negative costs **37a, 37b,** the computed usage threshold limit **37c** may be quickly and dynamically adjusted by over time forgetting previous occurrences of the events that generated the costs **37a, 37b.** The cost function **37** acting as a forgetting function readily adapts to newly encountered data pertaining to a change in vehicle driving or stopping behaviour. Forgetting functions have not been applied in the prior art for these purposes and may be particularly effective for intelligent vehicle deactivation control purposes.

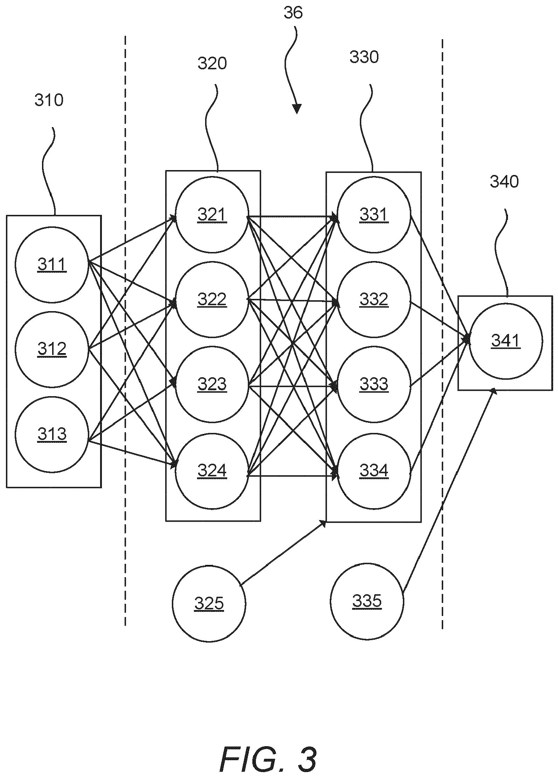

**FIG. 3** is an exemplary illustration of an autonomous model **36** which may be used to determine an at least partial vehicle deactivation. The autonomous model **36** is exemplified as a neural network having an input layer **310,** two hidden layers **320, 330,** and an output layer **340.** The input layer **310** comprises three nodes **311, 312, 313,** the first hidden layer **320** comprises four nodes **321, 322, 323, 324,** the second hidden layer **330** comprises four nodes **331, 332, 333, 334** and the output layer **340** comprises one node **341.** Moreover, the neural network comprises two weight nodes **325, 335,** each being associated with a respective hidden layer **320, 330.** The skilled person appreciates that this is just an exemplary neural network that can be implemented as the autonomous model **36.** Other networks may include any suitable number of input nodes, any suitable number of hidden layers and associated hidden nodes, any suitable number of output nodes, and any suitable number of weight nodes. The neural network may implement backpropagation for training purposes such that its performance of classifying vehicle deactivations may be improved. The input nodes **311, 312, 313** may receive input data comprising usage data **35** of the vehicle **10,** reference locations **33** and deactivation requests **20.** The output node **341** may output the controlled partial deactivation instruction **40** as a result of the processing of the input data by the hidden layers **320, 330** and associated weight nodes **325, 335.**

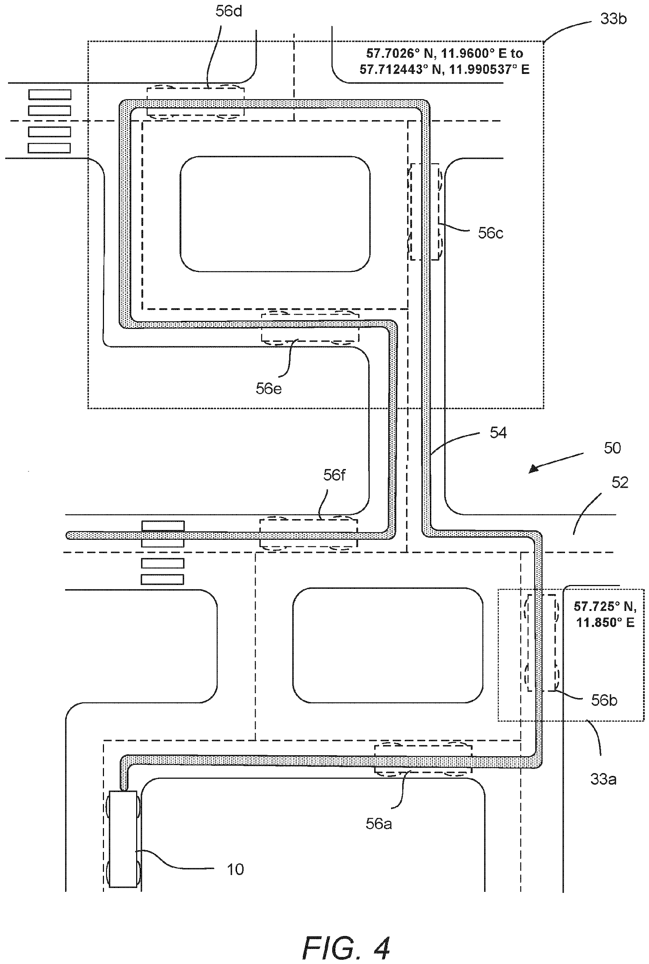

**FIG. 4** is an exemplary illustration of a road map **50** where a vehicle **10** may operate. The road map **50** comprises a plurality of interconnected road segments **52,** and the vehicle **10** is operating on the road segments **52** while following a general route **54.** While travelling on the route **54,** the vehicle **10** is assuming a plurality of vehicle positions **56a-f.** In the exemplary situation depicted by **FIG. 4****,** it is assumed that the vehicle **10** has previously been travelling generally according to the route **54** sometime in the past. To this end, historical information about previously occurred deactivation and activation actions has been retrieved. The historical usage pattern **34** has therefore indicated two distinct reference locations **33a, 33b** where high vehicle deactivation/activation activity is occurring. The first reference location **33a** is a smaller geographical area that is defined by the geographical coordinates 57.725°N, 11.850°E, which correspond to a particular drop-off/pick-up area at a Volvo office in Gothenburg, Sweden. The second reference location **33b** is a larger geographical area that is defined generally by the distance between the two sets of geographical coordinates 57.7026° N, 11.9600° E to 57.712443° N, 11.990537° E, which correspond to a central location in the city center of Gothenburg, Sweden. Hence, both of these reference locations **33a, 33b** are associated with high deactivation/activation activity. Since the deactivation/activation activity is high for these particular reference locations **33a, 33b,** deactivation of one or more subsystems **14** of the vehicle **10** is thus delayed when the vehicle **10** is located within these locations **33a, 33b,** respectively, even if deactivation is requested by the deactivation request **20.** In this particular example, this generally occurs when the vehicle **10** is positioned at location **56b,** and at positions **56c, 56d, 56e,** respectively. For the positions **56a** and **56f that** are not geographically associated with periods of high deactivation activity, vehicle subsystems **14** may be controlled to be deactivated in response to receiving a deactivation request **20,** as it is statistically unlikely that an upcoming activation is to be performed any time in the near future. In either one of the positions **56a-f,** the controlled partial deactivation instruction **40** is executed such that the vehicle **10** is at least partially deactivated immediately or after a delay. Clearly, "at least partially" may be no deactivation, a complete deactivation, or anywhere therebetween, as has been discussed above.

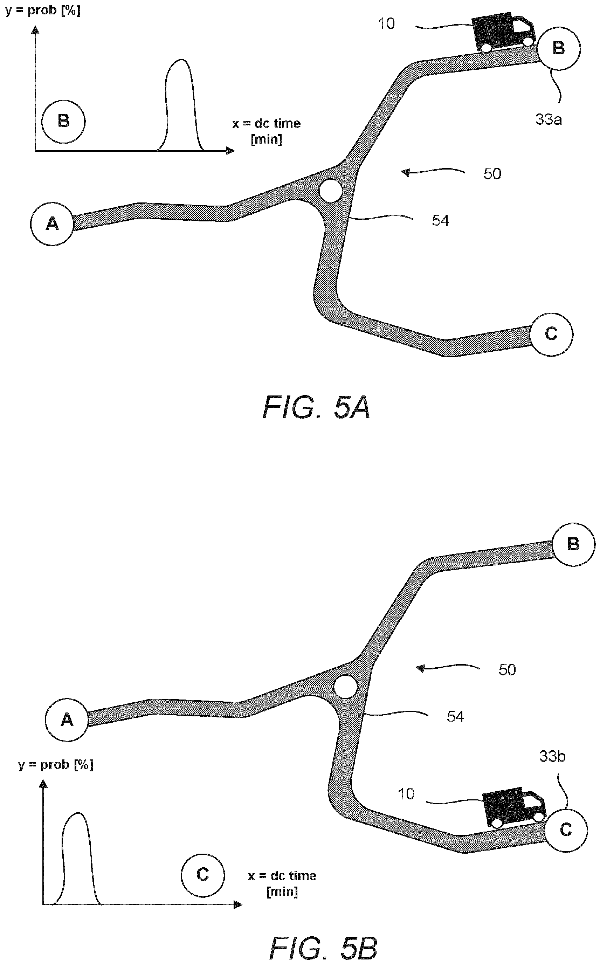

**FIGS. 5A-B** are exemplary illustrations of a vehicle deactivation control strategy according to two different scenarios.

In **FIG. 5A****,** a vehicle **10** has driven on a road map **50** along a route **54** from location "A" to location "B". Location "B" corresponds to a first reference location **33a.** Based on historical usage pattern of the vehicle **10** with reference to the first reference location **33a,** the vehicle **10** has previously learnt that at this location the vehicle **10** is expected to be deactivated for a long time (e.g., as statistically determined), as seen in the schematic diagram "B". This may be a couple of minutes or more. Hence, the vehicle **10** is deactivated as soon as the driver requests deactivation.

In **FIG. 5B****,** the vehicle **10** has driven on the road map **50** along the route **54** from location "A" to location "C". Location "C" corresponds to a second reference location **33b.** Based on historical usage pattern of the vehicle **10** with reference to the second reference location **33b,** the vehicle **10** has previously learnt that at this location the deactivation times are almost always relatively short (e.g., as statistically determined), as seen in the schematic diagram "C" compared to "B". This may be a couple of seconds. Hence, when the driver requests deactivation, the vehicle **10** uses a longer delay before allowing deactivation, to not cause an unnecessary deactivation. If the prediction is correct, then the driver will most likely request to re-activate the vehicle **10** before the long delay time has ended, and therefore the vehicle **10** has managed to avoid an unnecessary deactivation using prediction based on the historical usage pattern.

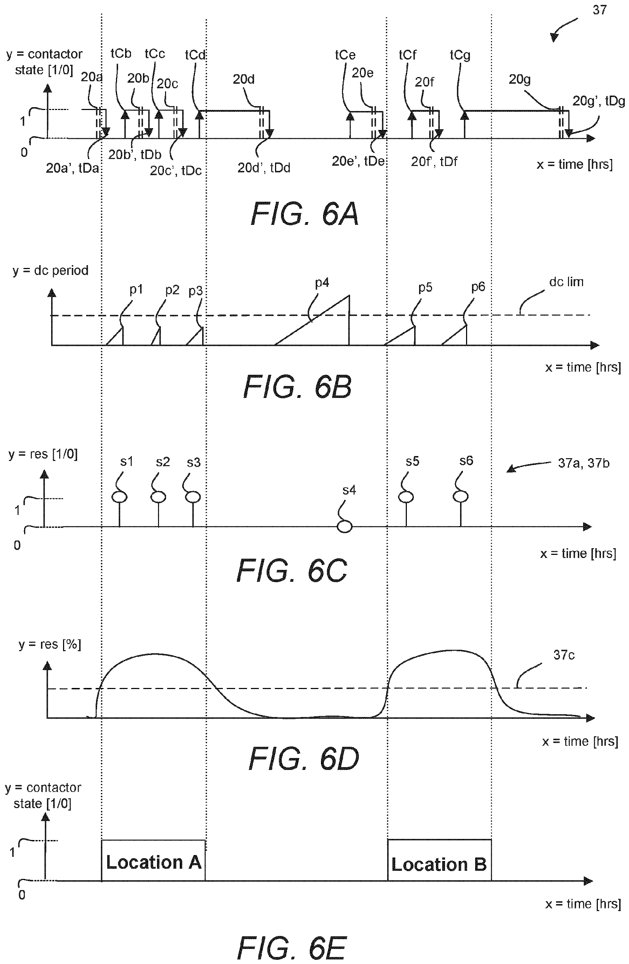

**FIGS. 6A-E** illustrate exemplary schematic diagrams that may be used in determining an at least partial vehicle deactivation at reference locations. In the following example, the autonomous model **36** calculates a cost function **37,** as was explained with reference to **FIG. 2****.**

**FIG. 6A** shows a diagram of deactivation requests **20a-g** occurring over time [hrs]. After a deactivation request **20a-g** has been received, the actual disconnect **20a'-g'** will be executed, for instance by a contactor disconnect, after a delay. The time upon which the actual disconnects **20a'-g'** occur are stored as **tDa** to **tDg** and the connector state is shifted from "1" to "0", where "1" on the y-axis corresponds to a contactor being connected, and "0" on the y-axis corresponds to the contactor being disconnected. Further, the times upon which subsequent connects occur are stored as **tCa** to **tCg** and the connector state is shifted from "0" to "1".

The total disconnect periods are calculated by subtracting the connect times **tCa** to **tCg** with the disconnect times **tDa** to **tDg,** thereby obtaining total disconnect periods **p1** to **p6,** as seen in **FIG. 6B****.** Furthermore, a time limit threshold **dc lim** is defined. The period **p4** that exceeds the time limit threshold **dc lim** is considered a long disconnect and periods **p1, p2, p3, p5, p6** that do not exceed the time limit threshold **dc lim** are considered short disconnects.

Based on which periods that exceed the time limit threshold **dc lim,** binary evaluation sample results **s1-s6** are determined, as shown in **FIG. 6C****.** As indicated in **FIG. 6C****,** the samples **s1, s2, s3, s5, s6** are given "1" as a result and the sample **s4** is given "0" as a result. These results are to be considered as incurring positive or negative costs **37a, 37b.**

In **FIG. 6D****,** the positive and negative costs **37a, 37b** are presented as a continuous cost function **y** = **f(x),** where **y** represents statistical probabilities for a deactivation request **20** to trigger deactivation delay or a lower energy consumption mode of a subsystem **14** at a particular time. Moreover, a suitable usage threshold limit **37c** is defined.

**FIG. 6E** shows, based on the cost function **37,** that two points in time are associated with sufficiently high activity with respect to activation/deactivation actions so as to maintain the contactor state at "1" even though deactivation requests **20** are obtained. These two points in time are related to two distinct locations ("Location A" and Location B"). Note that this is a different example from the one described with reference to **FIGS. 5A-B,** so the locations are different from those explained therein.. These locations may be used as the geographical reference locations **33** as discussed herein.

It should therefore be understood that geographical data associated with "Location A" and "Location B" are stored and used for subsequent deactivation control. To this end, if it is discovered at a later point in time (e.g., any time/day/season/month, etc.) that the vehicle **10** is located at either one of these locations, deactivation control is performed accordingly. In the example of **FIGS. 6A-E** reference locations are thus defined based on deactivation and/or activation activity occurring at particular geographical areas defined by geographical data. Such defining of reference locations may also be applicable to the other examples described in the present disclosure, without necessarily requiring implementation of the cost function **37.**

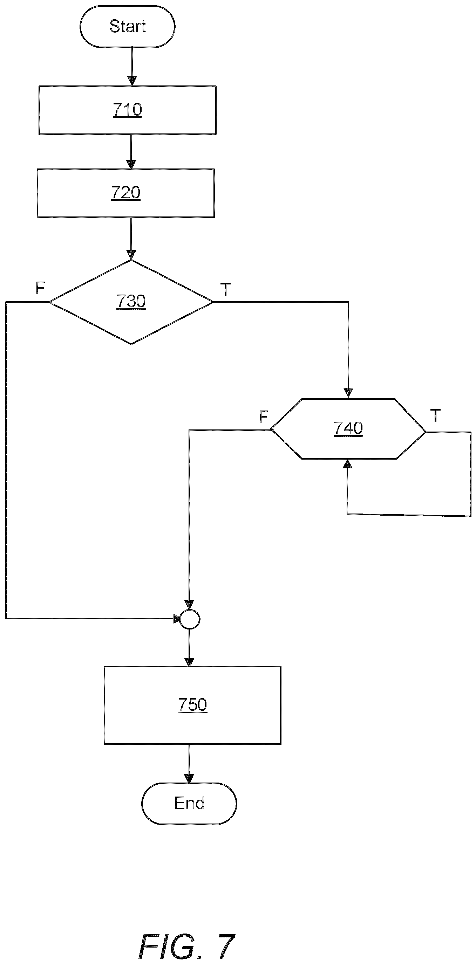

**FIG. 7** is an exemplary schematic flowchart illustration of a method. At **710,** the method comprises receiving a deactivation request. At **720,** the process of determining the controlled partial deactivation instruction is initiated. At **730,** a recommended deactivation delay is compared to a threshold limit, and if failing to exceed the threshold limit, the vehicle is deactivated as normal at **750.** This corresponds to a normal operation at a reference location of relatively low activation/deactivation activity. Conversely, if the recommended deactivation delay exceeds the threshold limit, the method proceeds to **740,** where a deactivation delay is initiated. The deactivation delay lasts until the vehicle no longer operates within the geographical reference location. After this occurs, the vehicle is deactivated at **750.** Hence, the method involves executing a controlled partial deactivation instruction for at least one subsystem by delaying the deactivation at **740.**

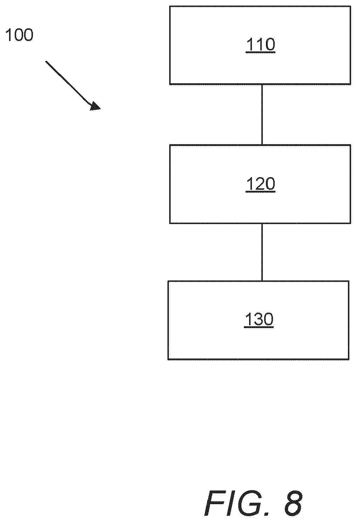

**FIG. 8** is a schematic diagram of a flowchart of a computer-implemented method **100** for controlling heavy-duty vehicle activation according to one example. The method **100** comprises receiving **110** a deactivation request to deactivate a heavy-duty vehicle. Further, the method **100** comprises determining **120** a controlled partial deactivation instruction of at least one subsystem of the heavy-duty vehicle, wherein the controlled partial deactivation instruction is determined by an autonomous model, said autonomous model comprising a historical usage pattern of the heavy-duty vehicle, the historical usage pattern comprising information of deactivation events and activation events of the heavy-duty vehicle having historically occurred at reference locations. The method **100** further comprises controlling **130** the heavy-duty vehicle to execute the controlled partial deactivation instruction such that the heavy-duty vehicle is at least partially deactivated either immediately, or after a delay, as determined by the controlled partial deactivation instruction.

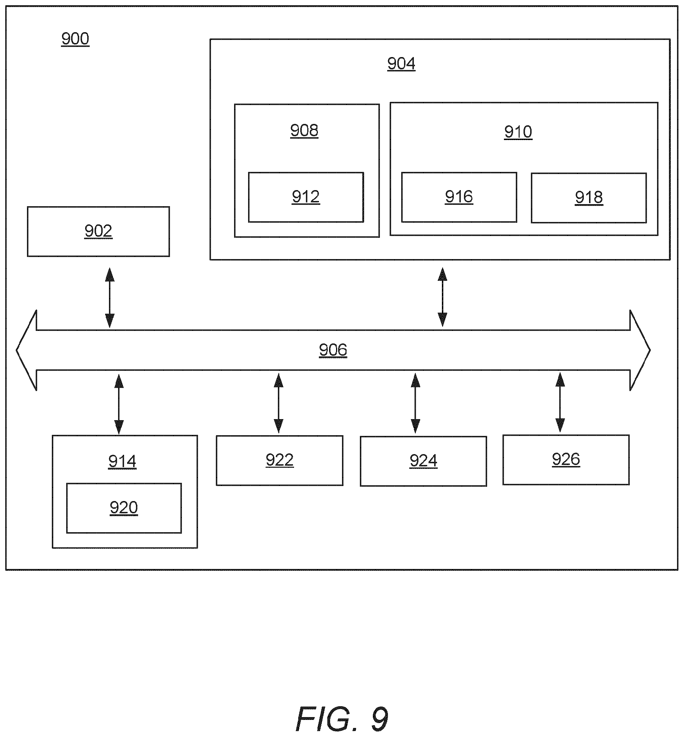

**FIG. 9** is a schematic diagram of a computer system **900** for implementing examples disclosed herein. The computer system **900** is adapted to execute instructions from a computer-readable medium to perform these and/or any of the functions or processing described herein. The computer system **900** may be connected (e.g.,, networked) to other machines in a LAN, an intranet, an extranet, or the Internet. While only a single device is illustrated, the computer system **900** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **900** may comprise at least one computing device or electronic device capable of including firmware, hardware, and/or executing software instructions to implement the functionality described herein. The computer system **900** may include a processor device **902** (may also be referred to as a control unit), a memory **904,** and a system bus **906.** The computer system **900** may include at least one computing device having the processor device **902.** The system bus **906** provides an interface for system components including, but not limited to, the memory **904** and the processor device **902.** The processor device **902** may include any number of hardware components for conducting data or signal processing or for executing computer code stored in memory **904.** The processor device **902** (e.g.,, control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus **906** may be any of several types of bus structures that may further interconnect to a memory bus (with or without a memory controller), a peripheral bus, and/or a local bus using any of a variety of bus architectures. The memory **904** may be one or more devices for storing data and/or computer code for completing or facilitating methods described herein. The memory **904** may include database components, object code components, script components, or other types of information structure for supporting the various activities herein. Any distributed or local memory device may be utilized with the systems and methods of this description. The memory **904** may be communicably connected to the processor device **902** (e.g.,, via a circuit or any other wired, wireless, or network connection) and may include computer code for executing one or more processes described herein. The memory **904** may include non-volatile memory **908** (e.g.,, read-only memory (ROM), erasable programmable read-only memory (EPROM), electrically erasable programmable read-only memory (EEPROM), etc.), and volatile memory **910** (e.g.,, random-access memory (RAM)), or any other medium which can be used to carry or store desired program code in the form of machine-executable instructions or data structures and which can be accessed by a computer or other machine with a processor device **902.** A basic input/output system (BIOS) **912** may be stored in the non-volatile memory **908** and can include the basic routines that help to transfer information between elements within the computer system **900.**

The computer system **900** may further include or be coupled to a non-transitory computer-readable storage medium such as the storage device **914,** which may comprise, for example, an internal or external hard disk drive (HDD) (e.g.,, enhanced integrated drive electronics (EIDE) or serial advanced technology attachment (SATA)), HDD (e.g.,, EIDE or SATA) for storage, flash memory, or the like. The storage device **914** and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device **914** and/or in the volatile memory **910,** which may include an operating system **916** and/or one or more program modules **918.** All or a portion of the examples disclosed herein may be implemented as a computer program product **920** stored on a transitory or non-transitory computer-usable or computer-readable storage medium (e.g.,, single medium or multiple media), such as the storage device **914,** which includes complex programming instructions (e.g.,, complex computer-readable program code) to cause the processor device **902** to carry out the steps described herein. Thus, the computer-readable program code can comprise software instructions for implementing the functionality of the examples described herein when executed by the processor device **902.** The processor device **902** may serve as a controller or control system for the computer system **900** that is to implement the functionality described herein.

The computer system **900** also may include an input device interface **922** (e.g.,, input device interface and/or output device interface). The input device interface **922** may be configured to receive input and selections to be communicated to the computer system **900** when executing instructions, such as from a keyboard, mouse, touch-sensitive surface, etc. Such input devices may be connected to the processor device **902** through the input device interface **922** coupled to the system bus **906** but can be connected through other interfaces such as a parallel port, an Institute of Electrical and Electronic Engineers (IEEE) 1394 serial port, a Universal Serial Bus (USB) port, an IR interface, and the like. The computer system **900** may include an output device interface **924** configured to forward output, such as to a display, a video display unit (e.g.,, a liquid crystal display (LCD) or a cathode ray tube (CRT)). The computer system **900** may also include a communications interface **926** suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A computer system (900) comprising a processor device (902) configured to:
receive a deactivation request (20) to deactivate a heavy-duty vehicle (10);
in response to said receiving, determine a controlled partial deactivation instruction (40) of at least one subsystem (14) of the heavy-duty vehicle (10), wherein the controlled partial deactivation instruction (40) is determined by an autonomous model (36), said autonomous model (36) comprising a historical usage pattern (34) of the heavy-duty vehicle (10), the historical usage pattern (34) comprising information of deactivation events and activation events of the heavy-duty vehicle (10) having historically occurred at reference locations (33); and
control the heavy-duty vehicle (10) to execute the controlled partial deactivation instruction (40) such that the heavy-duty vehicle (10) is at least partially deactivated either immediately, or after a delay, as determined by the controlled partial deactivation instruction (40).

2. A computer-implemented method (100) for controlling heavy-duty vehicle deactivation, the method (100) comprising:
receiving (110), by a processor device (902) of a computer system (900), a deactivation request (20) to deactivate a heavy-duty vehicle (10);
in response to said receiving, determining (120), by the processor device (902), a controlled partial deactivation instruction (40) of at least one subsystem (14) of the heavy-duty vehicle (10), wherein the controlled partial deactivation instruction (40) is determined by an autonomous model (36), said autonomous model (36) comprising a historical usage pattern (34) of the heavy-duty vehicle (10), the historical usage pattern (34) comprising information of deactivation events and activation events of the heavy-duty vehicle (10) having historically occurred at reference locations (33); and
controlling (130), by the processor device (902), the heavy-duty vehicle (10) to execute the controlled partial deactivation instruction (40) such that the heavy-duty vehicle (10) is at least partially deactivated either immediately, or after a delay, as determined by the controlled partial deactivation instruction (40).

3. The method (100) according to claim 2, wherein the autonomous model (36) is configured to:
receive input data comprising usage data (35) of the heavy-duty vehicle (10) with reference to said reference locations (33), and the deactivation request (20),
process the input data, and
output the controlled partial deactivation instruction (40) as a result of said processing of the input data.

4. The method (100) according to claim 2 or 3, wherein the autonomous model (36) is weighted for some of the reference locations (33) and/or a particular deactivation request (20) to deactivate the heavy-duty vehicle (10).

5. The method (100) according to any one of the claims 2 to 4, wherein the autonomous model (36) calculates a cost function (37), wherein said deactivation and activation events are associated with positive costs (37a), wherein time periods between a deactivation event and a subsequent activation event among said deactivation events and activation events having historically occurred are associated with negative costs (37b).

6. The method (100) according to claim 5, wherein the cost function (37) calculates a usage threshold limit (37c) by combining the positive and negative costs (37a, 37b) for said reference locations (33).

7. The method (100) according to claim 6, wherein said executing of the controlled partial deactivation instruction (40) involves determining whether the usage threshold limit (37c) is satisfied for a current geographical location.

8. The method (100) according to any one of the claims 5 to 7, wherein the cost function (37) is updated over time by continuously calculating positive and negative costs (37a, 37b) for the reference locations (33).

9. The method (100) according to claim 8, wherein the cost function (37) is a forgetting function in response to said continuous calculations of positive and negative costs (37a, 37b) for the reference locations (33).

10. The method (100) according to any one of the claims 2-9, wherein the controlled partial deactivation instruction (40) comprises:
an instruction (42) to set said at least one subsystem (14) into a lower energy consumption mode; and/or
an instruction (44) to deactivate said at least one subsystem (14).

11. The method (100) according to any one of the claims 2 - 10, wherein the reference locations (33) comprises one or more geographical areas defined by geographical coordinates retrieved from one or more positioning systems.

12. The method (100) according to any one of the claims 2 - 11, wherein the deactivation request (20) is received from:
a vehicle subsystem (14) in response to a vehicle subsystem condition being met, or
a driver of the heavy-duty vehicle (10), the driver being a person or an autonomous unit.

13. The method (100) according to any one of the claims 2 - 12, wherein said controlling (130) comprises selectively opening and/or closing of relays of one or more contactors (12) of the heavy-duty vehicle (10).

14. The method (100) according to any one of the claims 2 - 13, wherein the deactivation and activation events of the heavy-duty vehicle (10) comprise geographical data pertaining to the reference locations (33).

15. A heavy-duty vehicle (10) comprising the processor device to perform the method (100) of any of claims 2-14.

16. The heavy-duty vehicle (10) according to claim 15, further comprising one or more contactors (12), a contactor (12) being an electromechanical switching device configured to mechanically operate an electric contact of one or more of the at least one subsystem (14) of the heavy-duty vehicle (10).

17. The heavy-duty vehicle (10) according to claim 15 or 16, wherein the at least one subsystem (14) is an energy-consuming vehicle component.

18. A computer program product (920) comprising program code for performing, when executed by the processor device (902), the method (100) of any of claims 2 - 14.

19. A control system (900) comprising one or more control units configured to perform the method (100) of any of claims 2-14.

20. A non-transitory computer-readable storage medium comprising instructions, which when executed by the processor device (902), cause the processor device (902) to perform the method (100) of any of claims 2 - 14.
